# EUROPÄISCHE PATENTSCHRIFT

(11) **EP 4 320 549 B1**
(45) Veröffentlichungstag und Bekanntmachung des Hinweises auf die Patenterteilung: **02.07.2025**
(21) Anmeldenummer: 22720550.7
(22) Anmeldetag: 06.04.2022
(51) Int. Cl.: G06K 19/077, G06K 19/02

(54) **KARTENKÖRPER FÜR EINE CHIPKARTE, CHIPKARTE UND VERFAHREN ZUR HERSTELLUNG EINES KARTENKÖRPERS**
CHIP BODY FOR A CHIP CARD, CHIP CARD, AND METHOD FOR PRODUCING A CHIP BODY
CORPS DE PUCE DESTINÉ À UNE CARTE À PUCE, CARTE À PUCE ET PROCÉDÉ DE PRODUCTION D'UN CORPS DE PUCE

(30) Priorität: 08.04.2021 DE 102021001816
(43) Veröffentlichungstag der Anmeldung: 14.02.2024
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2022/025132
(87) Internationale Veröffentlichungsnummer: WO 2022/214220

(56) Entgegenhaltungen:
- US-A1- 2020 250 506
- US-A1- 2020 364 527

## Beschreibung

Die Erfindung betrifft einen Kartenkörper für eine Chipkarte, eine Chipkarte umfassend einen Kartenkörper sowie ein Verfahren zur Herstellung eines Kartenkörpers für eine Chipkarte.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird üblicherweise in eine Kavität oder Modulöffnung des Kartenkörpers eingesetzt.

Es werden Kartenkörper beziehungsweise Chipkarten mit außenliegenden Metallschichten, auch Metalface Karten genannt, betrachtet. Die Energiekopplung von DI-Systemen mit einem zwei Spulensystem (SPS) erfolgt durch Metallaufbauten mit einem Schlitz, bei dem der Magnet-/Stromfluß in den Metallflächen umgeleitet wird. Auf diese Weise verhindert der Schlitz einen Kurzschlussstrom. Ein derartiger Schlitz ist in beiden außenliegenden Metallschichten vorzusehen, was zu einer verringerten mechanischen Stabilität der Chipkarte beziehungsweise des Kartenkörper führt. Da der Schnitt bis zu der Modulöffnung reicht, kann es auch zu Beschädigungen des Moduls zum Beispiel durch Scherkräfte kommen.

Kartenkörper für Chipkarten sind beispielhaft aus der US 2020/250506 Al und der US 2020/364527 Al bekannt.

Aufgabe der vorliegenden Erfindung ist es daher, die Stabilität des Kartenkörpers und der Chipkarte im Bereich des Schlitzes zu verbessern.

Diese Aufgabe wird durch einen Kartenkörper für eine Chipkarte, eine Chipkarte umfassend einen Kartenkörper sowie ein Verfahren zur Herstellung eines Kartenkörpers für eine Chipkarte gemäß den unabhängigen Patentansprüchen gelöst. Ausgestaltungen und Weiterbildungen der Erfindung sind in den abhängigen Ansprüchen angegeben.

Ein erfindungsgemäßer Kartenkörper für eine Chipkarte umfasst
zwei Metallschichten zwischen denen eine nichtleitende Mittelschicht angeordnet ist, wobei in einer Metallschicht und der Mittelschicht eine Modulöffnung zum Aufnehmen eines Chipmoduls bereits erzeugt ist oder in einer Modulöffnungszone noch erzeugt werden kann, und
zwei Schlitze, von denen sich jeweils einer in einer Metallschicht von einer Umfangsfläche des Kartenkörpers bis zu der Modulöffnung oder bis zu der Modulöffnungszone erstreckt und jeweils die Metallschicht in einer Höhe durchtrennt,
wobei Eintrittswinkel der zwei Schlitze in die Metallschicht jeweils ungleich 90° zu einer Oberfläche der Metallschicht sind, und
wobei die zwei Schlitze eine gegensätzliche Neigung zu einer Flächennormalen der Oberfläche der Metallschicht aufweisen.

Ein Grundgedanke der vorliegenden Erfindung besteht darin, dass die Schlitze in den Metallschichten oder Metallkörpern nicht mehr senkrecht zu der Oberfläche ausgebildet sind, sondern in einem zu 90° unterschiedlichen Winkel. Anders ausgedrückt verläuft der Schlitz an der Oberfläche der Metallschicht schräg zu der Oberfläche. Dies führt zu einer Überlappung von durch den Schlitz getrennten Bereichen der Metallschicht in einer Richtung senkrecht zu der Oberfläche.

Durch diese Überlappung innerhalb einer Metallschicht kann eine Scherbewegung in eine Richtung unterbunden werden. Da beide Metallschichten jeweils einen Schlitz aufweisen und die beiden Schlitze zueinander verdreht ausgeführt sind, sind Scherbewegungen in beide Richtungen unterdrückt.

Die zwei Schlitze haben eine gegensätzliche Neigung zu einer Flächennormalen der Oberfläche der Metallschicht, so dass ein Schnittpunkt von Verlängerungen der zwei Schlitze in dem Kartenkörper oder in einer Ebene oder Verlängerung des Kartenkörpers liegt.

Als Kartenkörper wird hier ein Halbzeug für eine Chipkarte verstanden, in das noch kein Chipmodul eingesetzt ist. Ebenso kann auch die Modulöffnung für das Chipmodul noch nicht in dem Kartenkörper ausgenommen sein. Das Chipmodul wird an einer Seite der Chipkarte in die Modulöffnung eingesetzt. Die Modulöffnung reicht nur teilweise in die Mittelschicht der Chipkarte hinein, so dass die gegenüberliegende Metallschicht eine Modulöffnung aufweisen kann, in welche jedoch kein Chipmodul eingesetzt wird. Somit können die Ausnehmungen, das heißt Schlitz und Modulöffnung, beider Metallschichten identisch sein.

Alternativ kann nur der Schlitz in der gegenüberliegende Metallschicht vorhanden sein. Dann erstreckt sich der Schlitz in der Länge bis zu einer Modulöffnungszone, welche der gegenüberliegenden Modulöffnung entspricht. Der Schlitz kann bis zu einem Anfang, einem Ende oder einem mittleren Bereich dieser Modulöffnungszone reichen. Insbesondere kann der Schlitz eine Länge des gegenüberliegenden Schlitzes plus der Modulöffnung haben.

Mit den hier vorgeschlagenen Schlitzen wird zum einen der Kartenkörper hinsichtlich Scherung stabilisiert. Zudem ergibt sich der Vorteil, dass durch den schrägen Eintritt des Schlitzes die Eintrittstiefe in die Metallschicht im Gegensatz zu einem senkrechten Schlitz deutlich verringert wird. Dies führt zu einem wertigeren optischen Erscheinungsbild. Weiterhin kann nun der Schlitz mit einem Kleber oder einem anderen Material aufgefüllt werden, da der schräg verlaufende Schlitz ein Herauslaufen des Klebers oder des Materials verhindert oder zumindest deutlich reduziert.

Die hier vorgeschlagenen Schlitze haben somit den Vorteil, dass durch die entgegengesetzt schräggestellte Ausführung der Schlitze die mechanische oder strukturelle Stabilität des Kartenkörpers verbessert wird.

Als Eintrittswinkel des Schlitzes in die Metallschicht wird hier der Winkel des Schlitzes zu der Oberfläche der Metallschicht verstanden. Dieser Winkel kann auch als Austrittswinkel bezeichnet werden, da dieser Winkel keiner Funktionalität im Hinblick auf einen Ein- oder Austritt unterliegt.

Die Modulöffnung wird als Durchgangsöffnung oder als Sackloch in der Oberfläche der Metallschicht ausgebildet. Bei der Erstellung des Schlitzes ist entweder die Modulöffnung oder die entsprechende Modulöffnungszone, in welcher die Modulöffnung später ausgebildet wird, vorhanden.

Es kann vorgesehen sein, dass der Eintrittswinkel kleiner gleich 82°, vorzugsweise zwischen 30° und 60°, und höchst vorzugsweise 45° beträgt. Es hat sich gezeigt, dass derartige Winkel abhängig von der Dicke oder Höhe der Metallschicht und der Schlitzbreite eine gute Überdeckung der durch den Schlitz getrennten Bereiche der Metallschicht bieten. Das heißt, die durch den Schlitz getrennten Bereiche der Metallschicht "überlappen" einander zum Teil, wenn man senkrecht auf die Oberfläche sieht.

Es kann ferner vorgesehen sein, dass der Schlitz durch einen Verzahnungsschnitt geformt ist, der eine Überlappung zwischen zwei gegenüberliegenden Wänden des Schlitzes vorsieht. Unter einem Verzahnungsschnitt wird hier ein Schnitt verstanden, bei dem eine Überlappung entlang des Verlaufs des Schlitzes vorhanden ist. Diese Überlappung verhindert ein Scheren oder Verbiegen des Kartenkörpers in eine Richtung. Die beiden Hauptrichtungen, in denen ein Scheren oder Verbiegen verhindert werden soll, sind die beiden Normalvektoren auf die beiden Oberflächen des Kartenkörpers, das heißt die beiden Oberflächen der außenliegenden Metallschichten.

Es kann vorgesehen sein, dass die zwei Eintrittswinkel Supplementärwinkel sind. Zum Beispiel kann ein Eintrittswinkel 45° und der zweite Eintrittswinkel als entsprechender Supplementwinkel 135° betragen. Die beiden Eintrittswinkel sind dann gleich, aber um 180° gedreht. Ebenso können die beiden Eintrittswinkel unterschiedlich sein, insbesondere wenn die Dicke der Metallschichten unterschiedlich ist. Dann kann der Eintrittswinkel an die Gegebenheiten wie Dicke und/oder Material der Metallschicht angepasst werden.

Es kann ferner vorgesehen sein, dass die zwei Schlitze einen identischen Eintrittswinkel aufweisen und dass zwei Metallschichten um 180° gedreht zueinander an der Mittelschicht angeordnet sind. Dies ermöglicht eine einfache Fertigung, bei der identische Metallschichten gefertigt werden können. Die Schlitze können zum Beispiel mittels Laser- oder Wasserschneiden aus einem Bogen mit einer Stärke zwischen 50 µm und 300 µm erzeugt werden.

Es kann vorgesehen sein, dass eine Breite des Schlitzes kleiner gleich 50 µm ist. Der Schlitz sollte möglichst dünn sein, um eine gute mechanische Stabilität zu erzielen. Gleichzeitig sollte der Schlitz nicht zu dünn sein, um einen Kontakt der Wände des Schlitzes zu vermeiden, da dies zu einem Kurzschluss führen kann.

Es kann ferner vorgesehen sein, dass die Mittelschicht aus Kunststoff besteht. Zum Beispiel kann die Mittelschicht eine Kunststoffschicht oder ein Kern aus PVC, PE, PAL, PC oder ähnlichem Material sein. Da die strukturelle Steifigkeit durch die beiden außenliegenden Metallschichten übernommen wird, muß die Mittelschicht keinen besonderen Anforderungen genügen. Die Steifigkeit kann trotz der Schlitze erzielt werden, da diese schräg zueinander ausgeführt sind.

Es kann vorgesehen sein, dass die Dicke zumindest einer Metallschicht größer gleich 200 µm ist.

Es kann ferner vorgesehen sein, dass eine Gesamtdicke der zwei Metallschichten größer ist als eine Dicke der Mittelschicht. Die zueinander schräggestellten Schlitze erlauben dickere Metallschichten, das heißt einen dünneren Kunststoffkern, da dieser die Chipkatze nicht mehr stabilisieren muss.

Es kann vorgesehen sein, dass die Dicke einer Metallschicht kleiner gleich 50 µm ist und dass die eine Metallschicht mit mindestens einer Prägung versehen ist. Derart dünne Metallschichten können geprägt, zum Beispiel hochgeprägt, werden. Damit können optische und/oder taktile Kennzeichen in die Metallschicht eingebracht werden.

Es kann ferner vorgesehen sein, dass die zwei Schlitze nicht entlang einer Richtung einer Flächennormalen der Oberfläche der Metallschicht angeordnet sind. Die Schlitze sind also versetzt zueinander angeordnet. Die Schlitze sind im Bereich einer Verlängerung der Modulöffnung oder der Modulöffnungszone angeordnet, so dass zumindest einer der Schlitze mit der Modulöffnung verbunden ist. Wenn in einer Metallschicht keine Modulöffnung vorhanden ist, kann der Schlitz dieser Metallschicht auch außerhalb der Verlängerung der Modulöffnung liegen.

Eine erfindungsgemäße Chipkarte umfasst einen Kartenkörper wie zuvor beschrieben und ein zumindest teilweise in die Modulöffnung des Kartenkörpers eingebettetes Chipmodul. Es gelten die gleichen Vorteile und Modifikationen wie zuvor beschrieben.

Ein erfindungsgemäßes Verfahren zur Herstellung eines Kartenkörpers für eine Chipkarte umfasst die Schritte:
- Bereitstellen von zwei Metallschichten, wobei in einer Metallschicht eine Modulöffnung zum Aufnehmen eines Chipmoduls bereits erzeugt ist oder in einer Modulöffnungszone noch erzeugt werden kann,
- Erzeugen jeweils eines Schlitzes in den zwei Metallschichten, die sich von einer Umfangsfläche des Kartenkörpers bis zu der Modulöffnung oder bis zu der Modulöffnungszone erstrecken und die Metallschicht in einer Höhe durchtrennen, und
- Zusammenfügen der zwei Metallschichten und einer nichtleitenden Mittelschicht, welche zwischen den zwei Metallschichten angeordnet wird,
wobei Eintrittswinkel der Schlitze in die Metallschicht jeweils ungleich 90° zu einer Oberfläche der Metallschicht sind, und wobei die zwei Schlitze eine gegensätzliche Neigung zu einer Flächennormalen der Oberfläche der Metallschicht aufweisen.

Es gelten die gleichen Vorteile und Modifikationen wie zuvor beschrieben.

Es kann vorgesehen sein, dass das Zusammenfügen mittels eines Klebers erfolgt, wobei die Schlitze zumindest teilweise mit dem Kleber gefüllt werden. Der bei dem Zusammenfügen noch flüssige oder viskose Kleber läuft dann in den schräg ausgebildeten Schlitz hinein. Bedingt durch die Schräge des Schlitzes verbleibt der Kleber im Schlitz und läuft nicht hinaus. Der dann aushärtende Kleber hält die Wände des Schlitzes in Position, wodurch Verwindungen oder Scherungen des Kartenkörpers und damit der Chipkarte weiter erschwert oder unterbunden werden. Zudem kann die Gefahr eines Kurzschlusses weiter reduziert werden, da eine Kontaktierung der Wände des Schlitzes durch den Kleber verhindert wird.

Es kann ferner vorgesehen sein, dass die Modulöffnung erst nach dem Aufbringen der Kunststoffschichten erzeugt wird. Die hier vorgeschlagene Erzeugung des Schlitzes kann somit in verschiedenen Phasen der Herstellung eines Kartenkörpers oder einer Chipkarte eingesetzt werden.

Die vorliegende Erfindung wird nachfolgend mit Bezug auf die beiliegenden Zeichnungen beispielhaft beschrieben. Darin zeigen
Fig. 1: eine Draufsicht eines Kartenkörpers für eine Chipkarte;
Fig. 2: eine Ansicht einer Stirnseite einer Metallschicht des Kartenkörpers;
Fig. 3: eine Schnittdarstellung eines Kartenkörpers;
Fig. 4: eine Schnittdarstellung eines Kartenkörpers; und
Fig. 5: eine schematische Darstellung eines Verfahrens zur Herstellung eines Kartenkörpers.

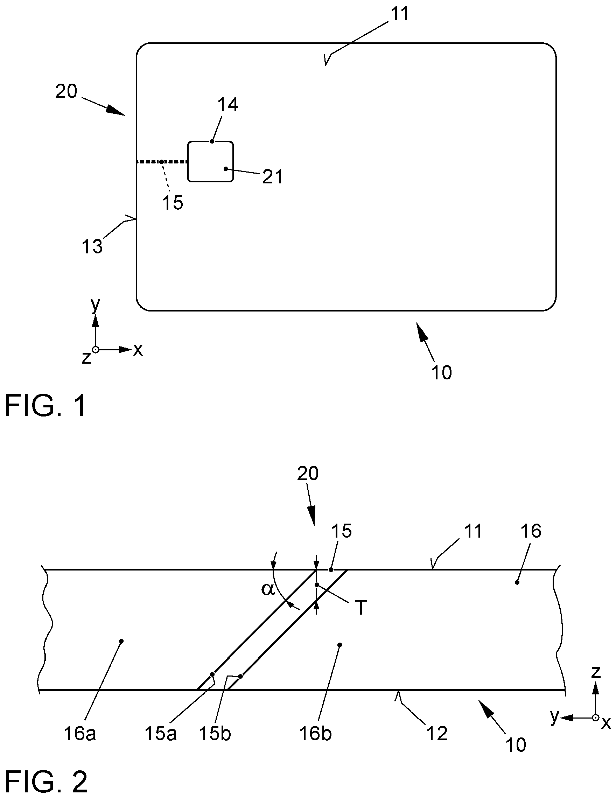

Fig. 1 zeigt eine Chipkarte 20 mit einem Kartenkörper 10. Der Kartenkörper 10 hat eine im wesentlichen rechteckige Grundform mit zwei gegenüberliegenden Oberflächen, von denen eine Oberfläche 11 in Fig. 1 sichtbar ist. Die andere, gegenüberliegende Oberfläche 12 ist in Fig. 2 dargestellt. Die beiden Oberflächen 11, 12 verlaufen parallel zueinander und sind durch eine umlaufende Umfangsfläche 13 verbunden.

Der Kartenkörper 10 hat eine rechteckige Form in einer x-y-Ebene, in der die Umfangsfläche 13 mit zwei in x-Richtung verlaufenden Längsflächen und zwei in y-Richtung verlaufenden Stirnflächen liegt. Die Dicke oder Höhe des Kartenkörpers 10 erstreckt sich in z-Richtung.

Eine Modulöffnung 14 für ein Chipmodul 21 ist in der Oberfläche 11 des Kartenkörpers 10 ausgenommen. Die Modulöffnung 14 erstreckt sich in den Kartenkörper 10 hinein. Die Modulöffnung 14 wird beispielsweise mittels eines Laserarbeitsganges oder Fräsarbeitsganges erstellt. Das Chipmodul 21 ist in die Modulöffnung 14 eingesetzt und dort zum Beispiel verklebt.

Das Chipmodul 21 kann eine Kontaktflächenstruktur, die eine Spule trägt, umfassen. Das Chipmodul 21 kann ferner einen Chip umfassen, der zum Beispiel in einer Vergussmasse an einer Unterseite der Kontaktflächenstruktur befestigt ist. Über die Spule wird der Chip mit Energie und/oder Signalen versorgt. So kann ein elektromagnetisches Feld in die Spule eingekoppelt werden.

In dem Kartenkörper 10 ist ein Schlitz 15 vorgesehen, der sich von der Umfangsfläche 13 oder mit anderen Worten von einer Außenkante des Kartenkörpers 10 zu der Modulöffnung 14 erstreckt. Somit verbindet der Schlitz 15 die Modulöffnung 14 mit der Umfangsfläche 13. Der Schlitz 15 dient zur Vermeidung von Kurzschlussströmen beziehungsweise Wirbelströmen.

Der Schlitz 15 verläuft in y-Richtung, das heißt parallel zu der Längsfläche. Der Schlitz 15 hat zum Beispiel eine Breite zwischen 30 µm und 100 µm, bevorzugt zwischen 50 µm und 80 µm. In Fig. 1 ist der Schlitz 15 auf einer linken Seite dargestellt. Der Schlitz 15 kann auch an einer rechten, oberen oder unteren Seite des Kartenkörpers 10 angeordnet sein.

Fig. 2 zeigt eine Ansicht einer Stirnseite einer Metallschicht 16 des Kartenkörpers 10. Die Metallschicht 16 ist eine außenliegende Metallschicht beziehungsweise eine Metallplatte. Entsprechend handelt es sich bei der Chipkarte 20 um eine sogenannte Metalface Karte.

Erkennbar ist, dass der Schlitz 15 die Metallschicht 16 in der Dicke oder Höhe, das heißt der z-Richtung, vollständig durchtrennt. Der Schlitz 15 verbindet somit die beiden Oberflächen 11 und 12. Der Schlitz 15 reicht in x-Richtung bis zu der Modulöffnung 14.

Ein Eintrittswinkel α des Schlitzes 15 ist zu der Oberfläche 11 und analog zu der Oberfläche 12 ungleich 90°.

In Fig. 2 ist der Schlitz 15 durchgängig in einem 45° Winkel ausgeführt. Der Eintrittswinkel α kann zum Beispiel kleiner gleich 82° oder zwischen 30° und 60° gewählt sein. Der Eintrittswinkel α kann je nach gewählter Seite oder Wand des Schlitzes 15 45° oder als entsprechender Supplementwinkel 135° betragen.

Der Schlitz 15 ist durch einen Verzahnungsschnitt geformt, der eine Überlappung oder Überdeckung zwischen zwei gegenüberliegenden Wänden 15a und 15b des Schlitzes 15 vorsieht. Diese Überlappung oder Überdeckung liegt in Richtung einer Flächennormale zu der Oberfläche 11 vor oder anders ausgedrückt in Richtung der Dicke oder Höhe des Kartenkörpers 10 oder der Metallschicht 16. In den Figuren ist dies die z-Richtung. Die beiden Wände 15a, 15b können parallel verlaufen.

Die oben angegebenen Winkel erlauben für die üblichen Dicken der Metallschicht 16 von zum Beispiel zwischen kleiner 50 µm und etwa 200 µm und üblichen Schnittbreiten zwischen 40 µm und 80 µm eine ausreichende Überlappung oder Überdeckung.

In dem in Fig. 2 dargestellten Beispiel beträgt die Dicke oder Höhe der Metallschicht 16 200 µm. Mit dem Eintrittswinkel α von 45° beträgt eine sichtbare Tiefe T etwa 80 µm. Die sichtbare Tiefe T ist die Entfernung der Wand 15b von der Oberfläche 11, lotrecht oder in Richtung der Flächennormalen der Oberfläche 11 an dem Eintrittspunkt der Wand 15a betrachtet. Diese sichtbare Tiefe T kann zum Beispiel als Maß für eine Überlappung oder Überdeckung gesehen werden.

Der Schlitz 15 mit seinen Wänden 15a und 15b teilt die Metallschicht 16 in zwei Bereiche 16a und 16b, wobei der Bereich 16a auf der Seite der Wand 15a liegt und von dieser begrenzt wird. Analog liegt der Bereich 16b auf der Seite der Wand 15b und wird von dieser begrenzt.

Im Bereich des Schlitzes 15 existiert somit eine Überlappung oder Überdeckung der beiden Wände 15a und 15b und somit der zwei Bereiche 16a und 16b der Metallschicht 16. Diese Überlappung oder Überdeckung liegt in Richtung der Flächennormalen der Oberfläche 11 vor. Bei einem, auch virtuellen, Schnitt in Richtung der Flächennormalen durch die Metallschicht 16 liegen somit stets ein Schnittpunkt mit beiden Wänden 15a und 15b und somit beiden Bereichen 16a und 16b vor.

Die Überlappung oder Überdeckung der beiden Wände 15a und 15b beziehungsweise der zwei Bereiche 16a und 16b blockiert nun das Verschieben des Bereichs 16a über den Bereich 16b. Dies entspricht einer Druckbewegung auf den Bereich 16b in z-Richtung, also einer Bewegung der beiden Wände 15a und 15b aufeinander zu. Der Bereich 16b kann sich nur einen kleinen Weg, der in etwa der sichtbaren Tiefe T entspricht, bewegen. Dann liegt er an dem Bereich 16a an und wird von diesem gestoppt. Somit kann der schräg ausgebildete Schlitz 15 eine unerwünschte Scherbewegung des Kartenkörpers 10 oder der Metallschicht 16 verhindern.

Wenn hingegen der Bereich 16b von dem Bereich 16a wegbewegt wird, was in Fig. 2 einer Bewegung nach unten in die negative z-Richtung entspricht, findet keine Blockierung statt.

Die obigen Betrachtungen der Bewegung des Bereichs 16b gelten analog für den Bereich 16a, nur mit entsprechend umgekehrter Bewegung.

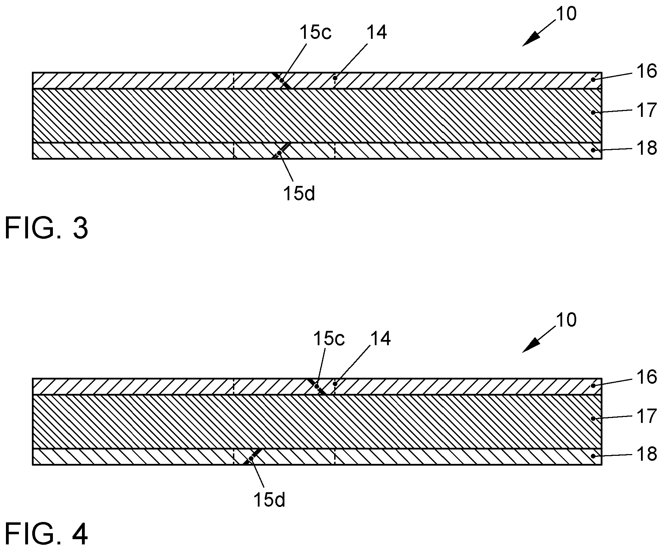

Fig. 3 zeigt eine Schnittdarstellung eines Kartenkörpers 10. Der Kartenkörper 10 umfasst die oben beschriebene Metallschicht 16, eine Mittelschicht 17 aus einem Kunststoff wie zum Beispiel PVC und eine weitere Metallschicht 18. Die drei Schichten sind zum Beispiel in einem Laminierprozess zusammengefügt worden. Die hier unten dargestellte Metallschicht 18 kann der hier oben angeordneten Metallschicht 16 entsprechen. Die obigen Ausführungen hinsichtlich der Metallschicht 16 gelten auch für das in Fig. 3 dargestellte Beispiel. Diese Ausführungen gelten analog für die weitere Metallschicht 18.

Die Gesamtdicke oder -höhe des Kartenkörpers 10 kann zum Beispiel 750 µm betragen. Die Dicke oder Höhe jeder Metallschicht 16, 18 kann zwischen 50 µm und 250 µm liegen. Die beiden Metallschichten 16 und 18 können eine identische oder unterschiedliche Stärke aufweisen. Auch kann vorgesehen sein, dass die Gesamtdicke der zwei Metallschichten 16, 18 größer ist als eine Dicke der Mittelschicht 17.

Die Metallschicht 16 umfasst einen Schlitz 15c, der hier zentral im Bereich der Modulöffnung 14 beziehungsweise deren Verlängerung angeordnet ist. Die Modulöffnung 14 für das Chipmodul erstreckt sich hier durch die gesamte Metallschicht 16 und kann als Sacklochöffnung bis in die Mittelschicht 17 ausgebildet sein. Sie kann auch erst später erzeugt werden. Die Modulöffnung 14 wird beispielsweise mittels eines Laserarbeitsganges oder Fräsarbeitsganges erstellt.

In diesem Beispiel hat der Schlitz 15c der Metallschicht 16 einen Winkel von 45° zu einer Oberfläche der Metallschicht 16. Dieser Winkel kann als +45° angesehen werden.

Die Metallschicht 18 umfasst einen Schlitz 15d, der hier ebenfalls zentral im Bereich der Modulöffnung 14 beziehungsweise deren Verlängerung angeordnet ist. In diesem Beispiel hat der Schlitz 15d der Metallschicht 18 einen Winkel von -45° zu einer Oberfläche der Metallschicht 16. Zu der Oberfläche der Metallschicht 18 hat der Schlitz 15d der Metallschicht 18 wiederum einen Winkel von +45°. Die beiden Metallschichten 16 und 18 können also identisch ausgebildet sein und um 180° gedreht an der Mittelschicht 17 angeordnet sein.

Die zwei Schlitze 15c und 15d haben somit eine gegensätzliche Neigung zu einer Oberfläche der Metallschicht 16, so dass ein Schnittpunkt von Verlängerungen der zwei Schlitze 15c und 15d in dem Kartenkörper 10 oder in einer Ebene oder Verlängerung des Kartenkörpers 10 liegt.

Im Bereich des Schlitzes 15c und 15d existiert somit jeweils eine Überlappung oder Überdeckung der beiden Wände der Schlitze 15c, 15d und somit der zwei durch den jeweiligen Schlitz getrennten Bereiche der Metallschicht 16 beziehungsweise 18. Diese Überlappung oder Überdeckung liegt in Richtung der Flächennormalen der Metallschicht 16 vor. Bei einem, auch virtuellen, Schnitt in Richtung der Flächennormalen durch den Kartenkörper 10 liegen in diesem Beispiel somit stets ein Schnittpunkt mit beiden Wänden des Schlitzes 15c und mit beiden Wänden des Schlitzes 15d vor. Entsprechend kann eine Scherbewegung des Kartenkörpers in beide Richtungen verhindert werden.

Fig. 4 zeigt eine Schnittdarstellung eines Kartenkörpers 10. Der Aufbau des hier dargestellten Kartenkörpers 10 entspricht im wesentlichem dem Aufbau des in der Fig. 3 dargestellten Kartenkörpers. Auch hier liegt eine Schichtenfolge einer Mittelschicht 17 mit zwei umgebenden Metallschichten 16 und 18 vor.

Die Winkel der Schlitze 15c und 15d entsprechen denen der Schlitze in Fig. 3. Jedoch ist hier die Position der beiden Schlitze 15c und 15d anders. Wiederum liegen beide Schlitze 15c, 15d im Bereich der Modulöffnung 14. Allerdings liegen die beiden Schlitze 15c und 15d außerhalb einer Mittellinie der Modulöffnung 14. Diese Mittellinie der Modulöffnung 14 kann auch der Mittellinie des Kartenkörpers 10 entsprechen.

Gemäß Fig. 4 ist der Schlitz 15c rechts der Mittellinie und der Schlitz 15d links der Mittellinie angeordnet. Diese Anordnung kann auch umgekehrt werden. Die beiden Schlitze 15c, 15d können einen gleichen Abstand zu der Mittelinie oder anders ausgedrückt zu den Rändern der Modulöffnung 14 haben.

Auch mit dieser Anordnung der beiden Schlitze 15c und 15d können Scherbewegungen des Kartenkörpers 10 in beide Richtungen wirksam unterdrückt werden.

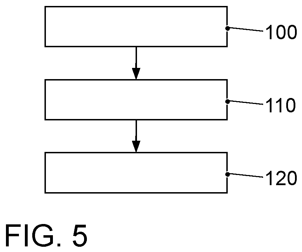

Fig. 5 zeigt eine schematische Darstellung eines Verfahrens zur Herstellung eines Kartenkörpers 10 für eine Chipkarte 20 wie zuvor beschrieben.

In einem ersten Schritt 100 erfolgt ein Bereitstellen von zwei Metallschichten 16, 18, wobei in einer Metallschicht 16 eine Modulöffnung 14 zum Aufnehmen eines Chipmoduls 21 bereits erzeugt ist oder in einer Modulöffnungszone noch erzeugt wird oder werden kann. Es kann lediglich eine Modulöffnung vorgesehen sein, dann wird nur eine der beiden Metallschicht 16 oder 18 eine Modulöffnung ausgenommen.

In einem zweiten Schritt 110 erfolgt ein Erzeugen jeweils eines Schlitzes 15 in den zwei Metallschichten 16, 18, die sich von einer Umfangsfläche des Kartenkörpers 10 bis zu der Modulöffnung 14 oder bis zu der Modulöffnungszone erstrecken und die Metallschicht 16, 18 in einer Höhe vollständig durchtrennen.

Sollte die Modulöffnung 14 in einem späteren Fertigungsschritt hergestellt werden, wird der Schlitz bis zu der entsprechenden Modulöffnungszone erzeugt, wo die Modulöffnung später ausgebildet werden soll. Sollte in einer der Metallschichten keine Modulöffnung vorgesehen sein, wird der Schlitz bis zu einer Modulöffnungszone, welche der Modulöffnung in der anderen Metallschicht gegenüberliegt, ausgebildet. Dabei kann der Schlitz auch durch die Modulöffnungszone ausgebildet werden.

Das Werkzeug zur Erstellung des Schlitzes 15 ist dabei auf die Oberfläche der Metallschicht 16 oder 18 gerichtet und zwar schräg unter einem Eintrittswinkel α.

Die Ausbildung des Schlitzes 15 wird derart vorgenommen, dass ein Eintrittswinkel α des Schlitzes 15 in eine Oberfläche ungleich neunzig Grad zu der Oberfläche ist. Der Schlitz 15 wird vollständig durch die Stärke der Metallschicht 16 oder 18 ausgeführt.

Weiterhin werden die beiden Schlitze 15 in den zwei Metallschicht 16 und 18 derart ausgenommen, dass die zwei Schlitze 15 eine gegensätzliche Neigung zu einer Flächennormalen der Oberfläche der Metallschicht aufweisen, so dass ein Schnittpunkt von Verlängerungen der Schlitze in dem Kartenkörper 10 oder einer Ebene oder Verlängerung des Kartenkörpers 10 liegt.

Optional, zum Beispiel wenn der Schlitz 15 mit einem Laser geschnitten wird, kann ein Fokus des Werkzeugs oder des Lasers mit zunehmender Schnitttiefe nachjustiert werden. So kann der Materialabtrag stets in einem optimalen Arbeitspunkt erfolgen. Da sich durch die Schrägstellung des Schlitzes 15 dessen Länge vergrößert, kann auch bei einem längeren Schnitt durch die Nachjustierung stets optimal geschnitten werden.

In einem dritten Schritt 110 erfolgt ein Zusammenfügen der zwei Metallschichten 16, 18 und einer nichtleitenden Mittelschicht 17, welche zwischen den zwei Metallschichten 16, 18 angeordnet wird. Dieser Schritt kann zum Beispiel durch ein Laminieren erfolgen.

Wenn ein Kleber für die Verbindung der einzelnen Schichten des Kartenkörpers 10 verwendet wird, kann der Schlitz 15 dann zumindest teilweise mit dem Kleber gefüllt werden. Durch die innere Kontur des Schlitzes 15 wird ein Auslaufen des Klebers zumindest teilweise verhindert, so dass dieser in dem Schlitz 15 verbleibt. Durch den in dem Schlitz aushärtenden Kleber wird der Kartenkörper 10 oder die Chipkarte 20 weiter stabilisiert.

Falls die Modulöffnung 14 im Kartenkörper 10 erst nach dem Laminieren hergestellt wird, so verhindert der in den Schlitz 15 geflossene und dort getrocknete oder ausgehärtete Kleber, dass bei der Erzeugung des Modulöffnung 14 anfallende Späne sich im Schlitz 15 festsetzen und dort einen elektrischen Kurzschluss hervorrufen können.

## Patentansprüche

1. Kartenkörper (10) für eine Chipkarte (20), aufweisend
zwei Metallschichten (16, 18) zwischen denen eine nichtleitende Mittelschicht (17) angeordnet ist, wobei in einer Metallschicht (16) und der Mittelschicht (17) eine Modulöffnung (14) zum Aufnehmen eines Chipmoduls (21) bereits erzeugt ist oder in einer Modulöffnungszone noch erzeugt werden kann, und
zwei Schlitze (15), von denen sich jeweils einer in einer Metallschicht (16, 17) von einer Umfangsfläche (13) des Kartenkörpers (10) bis zu der Modulöffnung (14) oder bis zu der Modulöffnungszone erstreckt und jeweils die Metallschicht (16, 17) in einer Höhe durchtrennt,
**dadurch gekennzeichnet, dass** Eintrittswinkel (α) der zwei Schlitze (15) in die Metallschicht (16) jeweils ungleich 90° zu einer Oberfläche (11) der Metallschicht (16) sind, und
wobei die zwei Schlitze (15) eine gegensätzliche Neigung zu einer Flächennormalen der Oberfläche (11) der Metallschicht (16) aufweisen.

2. Kartenkörper (10) nach Anspruch 1, **dadurch gekennzeichnet, dass** der Eintrittswinkel (α) kleiner gleich 82°, vorzugsweise zwischen 30° und 60°, und höchst vorzugsweise 45° beträgt.

3. Kartenkörper (10) nach Anspruch 1 oder 2, **dadurch gekennzeichnet, dass** der Schlitz (15) durch einen Verzahnungsschnitt geformt ist, der eine Überlappung zwischen zwei gegenüberliegenden Wänden (15a, 15b) des Schlitzes (15) vorsieht.

4. Kartenkörper (10) nach einem der Ansprüche 1 bis 3, **dadurch gekennzeichnet, dass** die zwei Eintrittswinkel (α) Supplementärwinkel sind.

5. Kartenkörper (10) nach einem der Ansprüche 1 bis 4, **dadurch gekennzeichnet, dass** die zwei Schlitze (15) einen identischen Eintrittswinkel (α) aufweisen und dass zwei Metallschichten (16, 18) um 180° gedreht zueinander an der Mittelschicht (17) angeordnet sind.

6. Kartenkörper (10) nach einem der Ansprüche 1 bis 5, **dadurch gekennzeichnet, dass** eine Breite des Schlitzes (15) kleiner gleich 50 µm ist.

7. Kartenkörper (10) nach einem der Ansprüche 1 bis 6, **dadurch gekennzeichnet, dass** die Mittelschicht (17) aus Kunststoff besteht.

8. Kartenkörper (10) nach einem der Ansprüche 1 bis 7, **dadurch gekennzeichnet, dass** die Dicke zumindest einer Metallschicht (16) größer gleich 200 µm ist.

9. Kartenkörper (10) nach einem der Ansprüche 1 bis 8, **dadurch gekennzeichnet, dass** eine Gesamtdicke der zwei Metallschichten (16, 18) größer ist als eine Dicke der Mittelschicht (17).

10. Kartenkörper (10) nach einem der Ansprüche 1 bis 9, **dadurch gekennzeichnet, dass** die Dicke einer Metallschicht (16) kleiner gleich 50 µm ist und dass die eine Metallschicht (16) mit mindestens einer Prägung versehen ist.

11. Kartenkörper (10) nach einem der Ansprüche 1 bis 10, **dadurch gekennzeichnet, dass** die zwei Schlitze (15) nicht entlang einer Richtung einer Flächennormalen der Oberfläche (11) der Metallschicht (16) angeordnet sind.

12. Chipkarte (20), umfassend einen Kartenkörper (10) nach einem der Ansprüche 1 bis 11 und ein zumindest teilweise in die Modulöffnung (14) des Kartenkörpers (10) eingebettetes Chipmodul (21).

13. Verfahren zur Herstellung eines Kartenkörpers (10) für eine Chipkarte (20) mit den Schritten:
- Bereitstellen von zwei Metallschichten (16, 18), wobei in einer Metallschicht (16) eine Modulöffnung (14) zum Aufnehmen eines Chipmoduls (21) bereits erzeugt ist oder in einer Modulöffnungszone noch erzeugt werden kann,
- Erzeugen jeweils eines Schlitzes (15) in den zwei Metallschichten (16, 18), die sich von einer Umfangsfläche (13) des Kartenkörpers (10) bis zu der Modulöffnung (14) oder bis zu der Modulöffnungszone erstrecken und die Metallschicht (16) in einer Höhe durchtrennen, und
- Zusammenfügen der zwei Metallschichten (16, 18) und einer nichtleitenden Mittelschicht (17), welche zwischen den zwei Metallschichten (16, 18) angeordnet wird, **dadurch gekennzeichnet, dass** Eintrittswinkel (α) der Schlitze (15) in die Metallschicht (16) jeweils ungleich 90° zu einer Oberfläche (11) der Metallschicht (16) sind, und wobei die zwei Schlitze (15) eine gegensätzliche Neigung zu einer Flächennormalen der Oberfläche (11) der Metallschicht (16) aufweisen.

14. Verfahren zur Herstellung eines Kartenkörpers (10) nach Anspruch 13, **dadurch gekennzeichnet, dass** das Zusammenfügen mittels eines Klebers erfolgt, wobei die Schlitze (15, 15c, 15d) zumindest teilweise mit dem Kleber gefüllt werden.

15. Verfahren zur Herstellung eines Kartenkörpers (10) nach Anspruch 13 oder 14, **dadurch gekennzeichnet, dass** die Modulöffnung (14) erst nach dem Zusammenfügen erzeugt wird.

## Claims

1. Card body (10) for a chip card (20), having
two metal layers (16, 18), between which a nonconductive central layer (17) is arranged, wherein a module opening (14) for receiving a chip module (21) is already created in one metal layer (16) and the central layer (17) or can still be created in a module opening zone, and
two slits (15), one of which respectively extends in a metal layer (16, 17) from a peripheral face (13) of the card body (10) to the module opening (14) or to the module opening zone and respectively divides the metal layer (16, 17) at a height,
**characterized in that** entry angles (α) of the two slits (15) into the metal layer (16) are respectively not equal to 90° with respect to a surface (11) of the metal layer (16), and
wherein the two slits (15) have an opposite inclination with respect to a surface normal of the surface (11) of the metal layer (16).

2. Card body (10) according to Claim 1, **characterized in that** the entry angle (α) is less than or equal to 82°, preferably between 30° and 60°, and most preferably 45°.

3. Card body (10) according to Claim 1 or 2, **characterized in that** the slit (15) is formed by an interlock cut, which provides an overlap between two opposite walls (15a, 15b) of the slit (15).

4. Card body (10) according to one of Claims 1 to 3, **characterized in that** the two entry angles (α) are supplementary angles.

5. Card body (10) according to one of Claims 1 to 4, **characterized in that** the two slits (15) have an identical entry angle (α), and **in that** two metal layers (16, 18) are arranged rotated by 180° with respect to one another on the central layer (17).

6. Card body (10) according to one of Claims 1 to 5, **characterized in that** a width of the slit (15) is less than or equal to 50 µm.

7. Card body (10) according to one of Claims 1 to 6, **characterized in that** the central layer (17) consists of plastic.

8. Card body (10) according to one of Claims 1 to 7, **characterized in that** the thickness of at least one metal layer (16) is greater than or equal to 200 µm.

9. Card body (10) according to one of Claims 1 to 8, **characterized in that** a total thickness of the two metal layers (16, 18) is greater than a thickness of the central layer (17).

10. Card body (10) according to one of Claims 1 to 9, **characterized in that** the thickness of a metal layer (16) is less than or equal to 50 µm, and **in that** the one metal layer (16) is provided with at least one stamping.

11. Card body (10) according to one of Claims 1 to 10, **characterized in that** the two slits (15) are not arranged along a direction of a surface normal of the surface (11) of the metal layer (16).

12. Chip card (20) comprising a card body (10) according to one of Claims 1 to 11 and a chip module (21) at least partially embedded into the module opening (14) of the card body (10).

13. Method for producing a card body (10) for a chip card (20), having the steps:
- providing two metal layers (16, 18), wherein a module opening (14) for receiving a chip module (21) is already created in one metal layer (16) or can still be created in a module opening zone,
- respectively creating a slit (15) in the two metal layers (16, 18), which slits extend from a peripheral face (13) of the card body (10) to the module opening (14) or to the module opening zone and divide the metal layer (16) at a height, and
- joining the two metal layers (16, 18) and a nonconductive central layer (17), which is arranged between the two metal layers (16, 18),
**characterized in that** entry angles (α) of the slits (15) into the metal layer (16) are respectively not equal to 90° with respect to a surface (11) of the metal layer (16), and wherein the two slits (15) have an opposite inclination with respect to a surface normal of the surface (11) of the metal layer (16).

14. Method for producing a card body (10) according to Claim 13, **characterized in that** the joining is carried out by means of an adhesive, the slits (15, 15c, 15d) being at least partially filled with the adhesive.

15. Method for producing a card body (10) according to Claim 13 or 14, **characterized in that** the module opening (14) is not created until after the joining.

## Revendications

1. Corps de carte (10) pour une carte à puce (20), comprenant
deux couches métalliques (16, 18) entre lesquelles est agencée une couche intermédiaire non-conductrice (17), une ouverture de module (14) destinée à recevoir un module de puce (21), qui est déjà réalisée dans une couche métallique (16) et dans la couche intermédiaire (17) ou qui peut encore être réalisée dans une zone d'ouverture de module, et
deux fentes (15) dont chacune s'étend dans une couche métallique (16, 17) depuis une surface périphérique (13) du corps de carte (10) jusqu'à l'ouverture de module (14) ou jusqu'à la zone d'ouverture de module et sépare la couche métallique (16, 17) à une certaine hauteur,
**caractérisé en ce que** les angles d'entrée (α) des deux fentes (15) dans la couche métallique (16) sont chacun différents de 90° par rapport à une surface (11) de la couche métallique (16), et
les deux fentes (15) présentant une inclinaison opposée à une normale à la surface (11) de la couche métallique (16).

2. Corps de carte (10) selon la revendication 1, **caractérisé en ce que** l'angle d'entrée (α) est inférieur ou égal à 82°, de préférence compris entre 30° et 60°, et, de manière la plus préférée, est de 45°.

3. Corps de carte (10) selon la revendication 1 ou la revendication 2, **caractérisé en ce que** la fente (15) est formée par une découpe en denture qui prévoit un chevauchement entre deux parois opposées (15a, 15b) de la fente (15).

4. Corps de carte (10) selon l'une des revendications 1 à 3, **caractérisé en ce que** les deux angles d'entrée (α) sont des angles supplémentaires.

5. Corps de carte (10) selon l'une des revendications 1 à 4, **caractérisé en ce que** les deux fentes (15) présentent un angle d'entrée (α) identique, et **en ce que** deux couches métalliques (16, 18) sont agencées sur la couche intermédiaire (17), à 180° l'une par rapport à l'autre.

6. Corps de carte (10) selon l'une des revendications 1 à 5, **caractérisé en ce qu'**une largeur de la fente (15) est inférieure ou égale à 50µm.

7. Corps de carte (10) selon l'une des revendications 1 à 6, **caractérisé en ce que** la couche intermédiaire (17) est en matière plastique.

8. Corps de carte (10) selon l'une des revendications 1 à 7, **caractérisé en ce que** l'épaisseur d'au moins une couche métallique (16) est supérieure ou égale à 200µm.

9. Corps de carte (10) selon l'une des revendications 1 à 8, **caractérisé en ce que** l'épaisseur totale des deux couches métalliques (16, 18) est supérieure à l'épaisseur de la couche intermédiaire (17).

10. Corps de carte (10) selon l'une des revendications 1 à 9, **caractérisé en ce que** l'épaisseur d'une couche métallique (16) est inférieure ou égale à 50µm et **en ce que** la couche métallique (16) est pourvue d'au moins un gaufrage.

11. Corps de carte (10) selon l'une des revendications 1 à 10, **caractérisé en ce que** les deux fentes (15) ne sont pas agencées selon une direction normale à la surface (11) de la couche métallique (16).

12. Carte à puce (20) comprenant un corps de carte (10) selon l'une des revendications 1 à 11 et un module de puce (21) au moins partiellement encastré dans l'ouverture de module (14) du corps de carte (10).

13. Procédé de fabrication d'un corps de carte (10) pour une carte à puce (20), comprenant les étapes suivantes :
- fourniture de deux couches métalliques (16, 18), une ouverture de module (14) destinée à recevoir un module de puce (21) étant déjà réalisée dans une couche métallique (16) ou pouvant encore être réalisée dans une zone d'ouverture de module,
- réalisation d'une fente (15) dans chacune des deux couches métalliques (16, 18), qui s'étendent depuis une surface périphérique (13) du corps de carte (10) jusqu'à l'ouverture de module (14) ou jusqu'à la zone d'ouverture de module et qui coupent la couche métallique (16) à une certaine hauteur, et
- assemblage des deux couches métalliques (16, 18) et d'une couche intermédiaire non-conductrice (17) qui est agencée entre les deux couches métalliques (16, 18),
**caractérisé en ce que** les angles d'entrée (α) des fentes (15) dans la couche métallique (16) sont chacun différents de 90° par rapport à une surface (11) de la couche métallique (16), et les deux fentes (15) présentant une inclinaison opposée par rapport à une normale à la surface (11) de la couche métallique (16).

14. Procédé de fabrication d'un corps de carte (10) selon la revendication 13, **caractérisé en ce que** l'assemblage s'effectue à l'aide d'un adhésif, les fentes (15, 15c, 15d) étant au moins partiellement remplies avec l'adhésif.

15. Procédé de fabrication d'un corps de carte (10) selon la revendication 13 ou la revendication 14, **caractérisé en ce que** l'ouverture de module (14) n'est réalisée qu'après l'assemblage.
